# EUROPÄISCHE PATENTSCHRIFT

(11) **EP 0 798 181 B1**
(45) Veröffentlichungstag und Bekanntmachung des Hinweises auf die Patenterteilung: **27.03.2002**
(21) Anmeldenummer: 96120307.2
(22) Anmeldetag: 18.12.1996
(51) Int. Cl.: B60S 1/04

(54) **Lagerung eines Wischerantriebes**
Bearing of a windscreen wiper drive
Palier d'entraînement d'un essuie-glace

(30) Priorität: 26.03.1996 DE 19611919; 16.10.1996 DE 19642667
(43) Veröffentlichungstag der Anmeldung: 01.10.1997
(73) Patentinhaber: ROBERT BOSCH GMBH, 70442 Stuttgart (DE)
(72) Erfinder: Muehlpforte, Kurt, 77815 Buehl (DE); Becker, Henk, 77815 Buehl (DE); Fleischer, Claus, 77815 Buehl (DE); Boos, Tino, Dipl.-Ing. (FH), 76532 Baden-Baden (DE)

(56) Entgegenhaltungen:
- EP-A- 0 147 782
- EP-A- 0 739 793
- EP-A- 0 897 357
- DE-A- 4 333 484
- FR-A- 2 667 833

## Beschreibung

### Stand der Technik

Die Erfindung geht von einer Wischeranlage mit einer Rohrplatine aus, an der ein Wischerantrieb mit einer Lagerstutzen geführten Antriebs welle befestigt ist und der Wischerantrieb mit dem Lagerstutzen in ein an der Rohrplatine angeordnetes rohrförmiges Element eingesteckt ist.

Wischeranlagen, insbesondere für Kraftfahrzeuge, werden mit einer Rohrplatine an der Karosserie des Kraftfahrzeugs fixiert. An der Rohrplatine ist ein Wischerantrieb befestigt, der mit einer Antriebswelle über ein Gestänge Abtriebswellen antreibt, die in Wischerlager gelagert sind, aus der Karosserie des Fahrzeugs ragen und auf denen Wischer aufgesteckt sind.

Der Wischerantrieb besteht aus einem Motor und einem Getriebe, aus dessen Lagerschild die Antriebswelle geführt in einen Lagerstutzen ragt. Der Wischerantrieb muß in axialer Richtung und in Umfangsrichtung fixiert werden, damit die Reaktionskräfte des zu übertragenden Drehmoments aufgenommen werden können.

Aus dem Stand der Technik ist eine Lagerung des Wischerantriebs bekannt, bei der um den Lagerstutzen drei am Lagerschild des Getriebes angeordnete Schraubendome mit Innengewinde angeordnet sind, über die der Wischerantrieb mit einem Aufnahmeblech verschraubt ist. Hierdurch entsteht ein beachtlicher Abstand zwischen dem Schwerpunkt des Wischerantriebs und dem Aufnahmeblech. Um die dadurch entstehenden Momente und Schwingungen im Betrieb zu beherrschen, müssen das Aufnahmeblech, das Lagerschild und die Befestigungselemente entsprechend stark und schwer dimensioniert werden. Ferner setzt sich die bekannte Rohrplatine zu Aufnahme des Wischerantriebs aus zahlreichen Einzelteilen zusammen. Diese verteuern die Fertigung und Montage.

Aus der nicht vorveröffentlichten EP-A-0 897 357 (WO-A-97/34789) ist eine Wischeranlage bekannt, in der die Rohrplatine ein durch Innenhochdruckverformung hergestelltes Formteil mit integrierten Lagerböcken und integrierter Antriebshalterung aufweist. Zur Herstellung wird ein rohrförmiges Halbzeug in eine mehrteilige Druckform mit einer die Gestalt der zu formenden Rohrplatine umschließenden Andruckfläche gegeben, in der radial zur Längsachse Ausbuchtungen angeordnet sind, und anschließend in seinem Innern Hochdruck beaufschlagt, wodurch die Rohrwandung allseitig an die Andruckfläche gepreßt und in die Ausbuchtungen getrieben wird.

EP-A-0 897 357 unter Art. 54(3) und (4) EPÜ fällt und für die Frage der erfinderischen Tätigkeit nicht von Bedeutung ist.

### Vorteile der Erfindung

Die erfindungsgemäße Lagerung mit den Merkmalen des Anspruchs 1 hat den Vorteil, daß der Abstand zwischen dem Schwerpunkt des Wischerantriebs und der Aufnahme von diesem durch das Einschieben des Lagerstutzens in das rohrförmige Element reduziert ist. Es wird eine kompaktere, verformungsfestere, biegesteifere und zugleich leichtere Lagerung erreicht. Der für die Lagerung der Antriebswelle erforderliche Lagerstutzen kann zusätzlich günstig für die Lagerung des Wischerantriebs genutzt werden. Wird das rohrförmige Element an die Rohrplatine angeformt, beispielsweise beim Gießen der Rohrplatine, durch ein Innenhochdruckverfahren oder durch sonstige Verfahren, werden zusätzliche Bauteile und Montageaufwand eingespart. Insbesondere durch das Innenhochdruckverfahren können hohe Gewichtseinsparungen durch hohle, relativ dünnwandige Formteile erreicht werden.

Das rohrförmige Element kann jedoch auch an die Rohrplatine angeschweißt werden. Die Rohrplatine mit dem angeformten rohrförmigen Element, in dem der Lagerstutzen in Umfangsrichtung formschlüssig fixiert ist, vereinigt die Vorzüge einer sehr leichten Konstruktion mit einer Reduktion von Bauteilen und Schnittstellen.

Ist das rohrförmige Element an der Rohrplatine angeformt und der Lagerstutzen des Getriebes durch die Rohrplatine gesteckt, wird der kleinstmögliche Stützabstand zur Rohrplatine in axialer Richtung der Antriebswelle und senkrecht dazu erreicht.

Hat das rohrförmige Element in axiale Richtung keine geschlossene Rohrflächen, sondern nur oben und unten einen Stützkragen mit kleinen Stützflächen, wie sie bei der Herstellung mit einem Innenhochdruckverfahren entstehen, kann ein dauerhafter Kraftschluß mit zulässigen spezifischen Spannungen nicht mehr erreicht werden, da die Stützflächen und Querschnitte hierfür zu klein sind. Vorteilhaft wird dann der Lagerstutzen und das rohrförmige Element in Umfangsrichtung durch Formschluß oder einen kombinierten Form-Kraftschluß fixiert.

Vorzugsweise wird der Formschluß in Umfangsrichtung zwischen dem Lagerstutzen und dem rohrförmigen Element durch eine von der Kreisform abweichenden Innenkontur, insbesondere eine polygonförmige oder sonstwie regelmäßige oder unregelmäßige unrunde Innenkontur, z.B. eine ellipsenförmige Kontur, des rohrförmigen Elements, und einer passenden Außenkontur des Lagerstutzens erreicht. Eine passende Außenkontur kann entweder mit ihrem gesamten Umfang oder nur mit Teilbereichen ihres Umfangs formschlüssig an der Innenkontur anliegen.

Eine weitere Ausgestaltung der Erfindung besteht darin, den Formschluß durch eine Verzahnung zwischen dem Lagerstutzen und dem rohrförmigen Element zu erzielen.

Ist die Kontur zwischen dem Lagerstutzen und dem rohrförmigen Element in Längsrichtung konisch gestaltet, wird der Einführvorgang zu Beginn erleichtert, weil ein kleiner Außendurchmesser des Lagerzapfens auf einen großen Innendurchmesser des rohrförmigen Elements trifft. Erst am Ende des Montagevorgangs treffen die beiden Teile mit ihren Fügeflächen aufeinander. Dies erleichtert den Montagevorgang insbesondere bei Stützflächen mit beträchtlichem axialem Abstand und formschlüssigem Verbund. Dabei kann zusätzlich eine Vorspannung erzeugt werden. Nach einer weiteren Ausgestaltung der Erfindung wird dieser Effekt auch durch eine abgestufte Kontur zwischen Lagerstutzen und rohrförmigen Element erreicht. Bei einer konischen oder abgestuften Kontur und Stützflächen mit axialem Abstand reicht eine von der Kreisform abweichende Stützfläche, d. h. Innenkontur des rohrförmigen Elements, und eine passende Außenkontur des Lagerstutzens aus, um einen Formschluß zu erreichen.

In einer weiteren Ausgestaltung der Erfindung wird das rohrförmige Element mit einem Dorn vor der Montage kalibriert. Der Dorn kann profiliert gestaltet sein, beispielsweise mit einer Verzahnung, um eine Fläche zu schaffen, die mit einer entsprechend gestalteten Außenkontur des Lagerstutzens einen form- oder kraftschlüssigen festen Verbund bildet.

Der Wischerantrieb wird in einer Ausgestaltung der Erfindung in axialer Richtung mit mindestens einem Bügel fixiert, der die Rohrplatine mindestens teilweise umgreift. Dies kann mit einem Stahl-, Kunststoffbügel oder mit einer Bügelfeder erreicht werden, die an dem Wischerantrieb, vorzugsweise an den Getriebe, befestigt sind. Sie können auch dieses vollständig umgreifen. Die Bügel können durch die Rohrplatine oder durch an der Rohrplatine angebrachte Schlaufen greifen. Vorzugsweise werden zwei Bügel verwendet - einer links und einer rechts neben dem Lagerstutzen -, um eine symmetrische Abstützung zu erreichen. Der Bügel kann zusätzlich zu einer axialen auch zu einer radialen Fixierung genutzt werden, die in Kombination zu einer weiteren Vorrichtung, beispielsweise zu einem Kraft-Formschluß genutzt werden kann.

Ferner besteht eine Variante der Erfindung darin, den Wischerantrieb mit mindestens einer Schraube durch die Rohrplatine mit dieser zu verschrauben und somit axial zu fixieren. Dies stellt eine einfache und wirkungsvolle Konstruktion dar, die ebenfalls Kräfte in Umfangsrichtung aufnehmen kann.

Weiter wird vorgeschlagen, den Lagerstutzen im rohrförmigen Element in axialer Richtung formschlüssig zu fixieren. Damit kann eine axiale Sicherung bei geringem Bauraum und mit wenig zusätzlichen Teilen erreicht werden.

Nach einer Ausgestaltung der Erfindung wird dies mit einem Sicherungsring erzielt. Vorzugsweise wird dann der Lagerstutzen und das rohrförmige Element mit einer Feder, beispielsweise mit eine Tellerfeder, gegeneinander verspannt, damit kein ungewünschtes Spiel entsteht. Eine zweite Möglichkeit besteht darin, mit einer Überwurfmutter, die von oben auf den Lagerstutzen geschraubt wird, sich auf dem rohrförmigen Element abstützt, den Lagerstutzen von unten in das rohrförmige Element zu pressen. Eine dritte Ausgestaltung der Erfindung wird geschaffen, indem der Lagerstutzen durch eine Umformung des rohrförmigen Elements fixiert wird, beispielsweise indem der Lagerstutzen eine Nut aufweist, in die das rohrförmige Element geprägt wird.

Vorzugsweise wird die Verbindung zwischen dem rohrförmigen Element und dem Lagerstutzen zu mindestens einem weiteren Befestigungspunkt der Wischeranlage an ein angrenzendes Bauteil, beispielsweise an die Karosserie des Kraftfahrzeugs, genutzt. Hierbei können möglicherweise zusätzlich benötigte Bauteile für zwei Funktionen genutzt werden, ohne daß ein wesentlich größerer Bauraum entsteht.

Wird mindestens ein Befestigungspunkt der Wischeranlage an ein eingrenzendes Bauteil am Wischerantrieb integriert, wird gleichzeitig der verhältnismäßig schwere Wischerantrieb am angrenzenden Bauteil direkt fixiert. Möglicherweise auftretende Momente, die entstehen, wenn der Wischerantrieb über die Rohrplatine an dem angrenzendes Bauteil befestigt ist, entfallen.

### Zeichnung

In der Zeichnung sind Ausführungsbeispiele der Erfindung dargestellt. In der Beschreibung und in den Ansprüchen sind zahlreiche Merkmale im Zusammenhang aufgeführt und beschrieben. Der Fachmann wird die Merkmale zweckmäßigerweise auch einzeln betrachten und zu weiteren sinnvollen Kombinationen zusammenfassen.
Es zeigen:
- Fig. 1: einen durch Bügel fixierten Wischerantrieb,
- Fig. 2: eine Draufsicht von Figur 1,
- Fig. 3 bis 8: Außen- und Innenkonturen eines Lagerstutzens und eines rohrförmigen Elements,
- Fig. 9: eine konische Kontur zwischen einem rohrförmigen Element und einem Lagerstutzen,
- Fig. 10: eine abgestufte Kontur zwischen einem rohrförmigen Element und einem Lagerstutzen,
- Fig. 11: einen durch Bügelfedern fixierten Wischerantrieb,
- Fig. 12: eine Ansicht entlang der Linie XII-XII in Figur 11,
- Fig. 13: einen mit Schrauben fixierten Wischerantrieb,
- Fig. 14: eine Draufsicht von Figur 13,
- Fig. 15: einen mit einem Sicherungsring und einer Feder fixierten Wischerantrieb,
- Fig. 16: einen mit einer Überwurfmutter fixierten Wischerantrieb,
- Fig. 17: einen mit einer Umformung fixierten Wischerantrieb und
- Fig. 18: eine Schnittansicht entlang der Linie XVIII-XVIII in Figur 17.

### Beschreibung der Ausführungsbeispiele

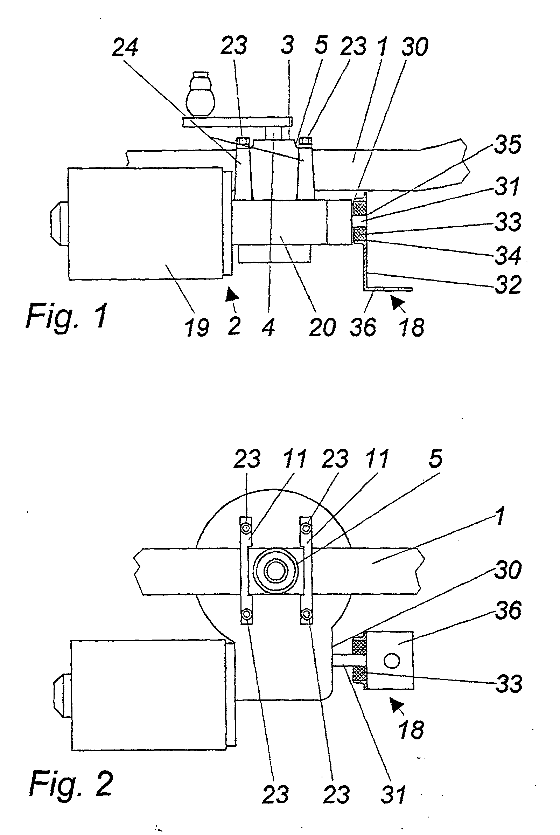

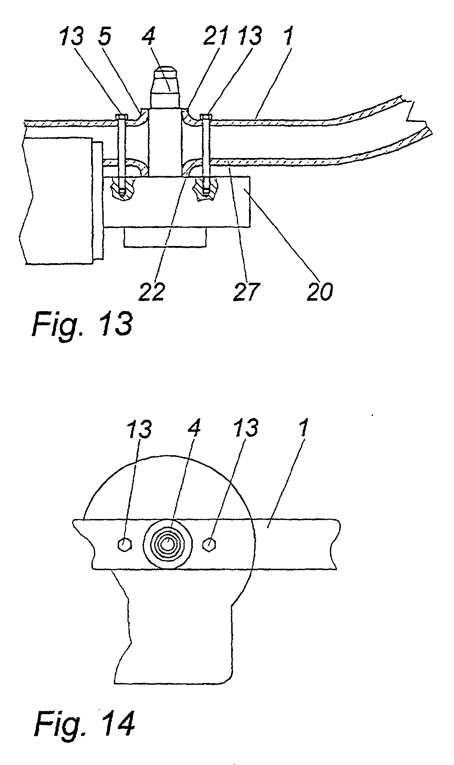

In Figur 1 ist eine Rohrplatine 1 dargestellt, an die ein rohrförmiges Element 5 angeformt ist. Das rohrförmige Element besteht aus einem oberen ringförmigen Kragen 21 und einem unteren ringförmigen Kragen 22, wie dies in Figur 13 zu erkennen ist, und kann beispielsweise durch ein Innenhochdruckverfahren, ein Gießverfahren usw. angeformt oder angeschweißt sein. An dem ringförmigen Element 5 ist eine Wischerantrieb 2 angeordnet. Der Wischerantrieb 2 besteht aus einem Motor 19 und einem Getriebe 20. Aus dem Getriebe 20 ragt eine in einem Lagerstutzen 3 geführte Antriebswelle 4. Der Wischerantrieb 2 ist mit seinem Lagerstutzen 3 in das rohrförmige Element 5 eingesteckt, wodurch der Stützabstand zwischen Wischerantrieb 2 und Rohrplatine 1 sehr gering ist.

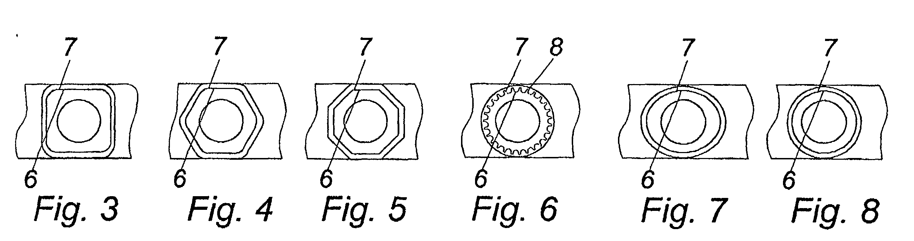

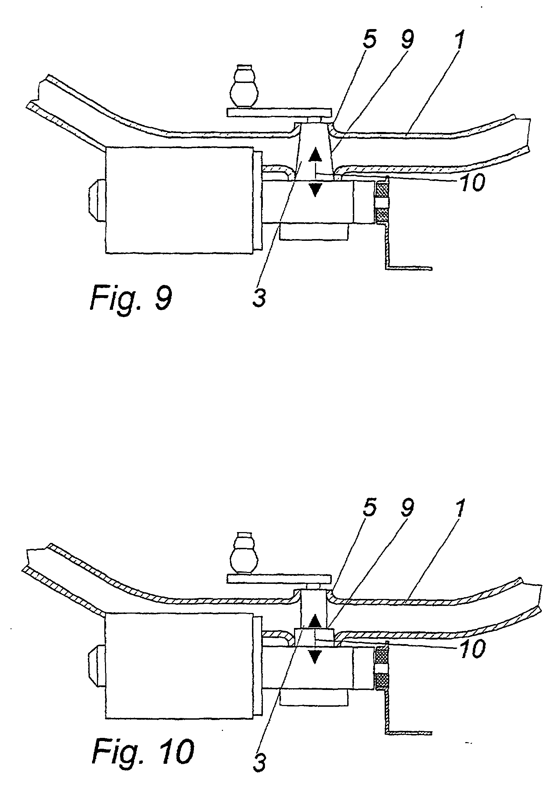

Erfindungsgemäß wird der Lagerstutzen 3 in Umfangsrichtung durch Formschluß fixiert, indem das rohrförmige Element 5 eine von der Kreisform abweichende, insbesondere eine polygonförmige oder sonstwie unrunde Innenkontur 6 und der Lagerstutzen 3 eine passende Außenkontur 7 aufweist. In Figur 3 ist beispielsweise eine viereckige, in Figur 4 eine sechseckige und in Figur 5 eine achteckige Innenkontur 6 und Außenkontur 7 dargestellt. Grundsätzlich sind sämtliche Polygonformen denkbar. In Figur 6 ist eine Innenkontur 6 und Außenkontur 7 dargestellt, die über eine Verzahnung 8 formschlüssig ineinander greifen. Figur 7 zeigt eine unrunde, z.B. ellipsenförmige Innenkontur 6 des rohrförmigen Elements 5 und eine entsprechende Außenkontur 7 des Lagerstutzens 3. Grundsätzlich ist auch eine runde Innenkontur 6 und Außenkontur 7 denkbar, wie sie in Figur 8 dargestellt sind. Die Fixierung in Umfangsrichtung kann dann durch Formschluß mit einem zusätzlichen Bauteil oder durch eine Kombination davon mit Kraftschluß oder Stoffschluß erreicht werden.

In Figur 9 ist ein Lagerstutzen 3 und ein rohrförmiges Element 5 dargestellt, die in Längsrichtung 10 eine konische Kontur 9 aufweisen. Hierdurch wird der Einführvorgang erleichtert, weil zuerst der obere kleine Außendurchmesser des Lagerstutzens 3 auf den unteren großen Innendurchmesser des rohrförmigen Elements 5 trifft und erst am Ende des Montagevorgangs Fügeflächen aufeinander treffen. Der gleiche Effekt wird erreicht, wenn die Kontur 9 in Längsrichtung 10 abgestuft ist, wie dies in Figur 10 dargestellt ist.

In axialer Richtung 10 wird der Wischerantrieb 2 in einer Ausgestaltung der Erfindung mit mindestens einem Bügel 11 fixiert, der die Rohrplatine 1 mindestens teilweise umgreift. In Figur 1 und 2 ist eine Variante dargestellt. Der Wischerantrieb 2 ist mit zwei symmetrischen Bügeln 11 mit der Rohrplatine 1 verspannt, die sich symmetrisch links und rechts neben dem Lagerstutzen 3 befinden und jeweils mit zwei Schrauben 23 auf zwei Gewindestutzen 24 befestigt sind. Die Gewindestutzen 24 sind auf dem Getriebe 20 angeordnet, angeschweißt oder angeformt. Die Bügel 11 umgreifen die Rohrplatine 1 vollständig.

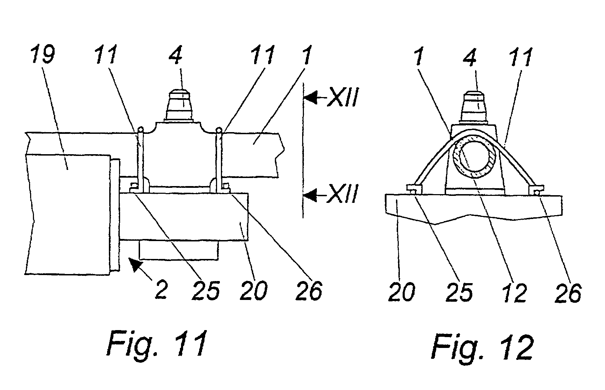

In Figur 11 und 12 ist eine weitere Variante mit zwei Bügelfedern 11 dargestellt. Die Bügelfedern 11 sind mit ihren Enden 25, 26 am Getriebe vor und hinter der Rohrplatine 1 befestigt und umspannen diese vollständig. In dem dargestellten Beispiel sind wiederum zwei Bügelfedern 11 links und rechts neben der Antriebswelle 4 verspannt. Der Bügel 11 muß die Rohrplatine 1 nicht vollständig umgreifen, sondern kann durch diese hindurch oder durch an der Rohrplatine 1 angeordnete nicht dargestellte Laschen greifen.

Nach einem weiteren Vorschlag (Figur 13 und 14) ist die Rohrplatine 1 durch mindestens eine Schraube 13 mit dem Getriebe 20 verschraubt. Vorzugsweise sind zwei Schrauben 13 symmetrisch links und rechts neben der Antriebswelle 4 angeordnet, die vollständig durch die Rohrplatine 1, wie dies dargestellt ist, oder nur durch den unteren Teil 27 der Rohrplatine 1 greifen können.

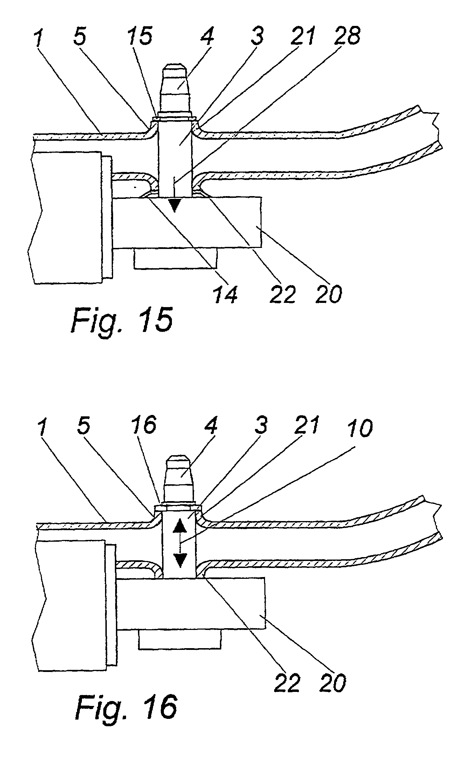

Bei einer Ausgestaltung der Erfindung wird der Lagerstutzen 3 im rohrförmigen Element 5 in axialer Richtung 10 mit einem Sicherungsring 15 oder einem sonstigen Sicherungselement, beispielsweise mit einer sogenannten Speednut, formschlüssig fixiert. Vorzugsweise wird der Lagerstutzen 3 gegen das rohrförmige Element 5 mit einer Feder 14 in axialer Richtung 10 vorgespannt. Bei einer in Figur 15 dargestellten Variante ist eine Tellerfeder 14 auf den Lagerstutzen 3 aufgesteckt, die nach dem Einführen des Lagerstutzens 3 in *das* rohrförmige Element 5 sich zwischen dem unteren ringförmigen Kragen 22 und dem Getriebe 20 befindet und eine nach unten aus dem rohrförmigen Element 5 weisende Kraft 28 auf den Lagerstutzen 3 erzeugt. Die Bewegung des Lagerstutzens 3 aus dem rohrförmigen Element 5 wird durch einen oben auf dem Lagerstutzen 3 angeordneten Sicherungsring 15 verhindert, der sich auf dem oberen Kragen 21 abstützt.

In Figur 16 ist der Lagerstutzen 3 axial mit einer Überwurfmutter 16 fixiert. Diese wird nach dem Einführen des Lagerstutzens 3 in das rohrförmige Element 5 von oben auf den Lagerstutzen 3 aufgeschraubt, stützt sich auf dem oberen Kragen 21 des rohrförmigen Elements 5 ab und zieht den Lagerstutzen 3 von unten in das rohrförmige Element 5. Das Getriebe 20 stützt sich dann am unteren Kragen 22 ab.

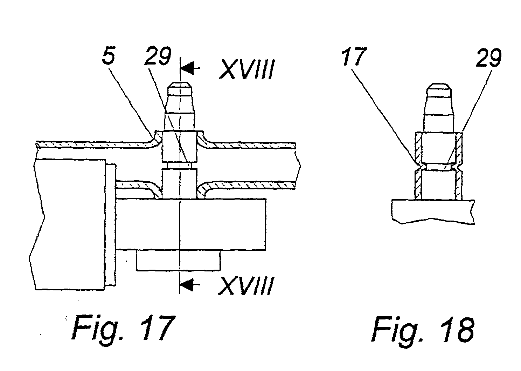

Wie Figur 17 und 18 zeigen, kann der Lagerstutzen 3 in axialer Richtung 10 durch eine Umformung 17 des rohrförmigen Element 5 fixiert werden. Dies wird erreicht, indem der Lagerstutzen 3 eine Nut 29 aufweist, in die das rohrförmige Element 5 geprägt, bzw. gedrückt wird. Dies geschieht vorzugsweise 90° zur Längsrichtung der Rohrplatine 1.

In dem Beispiel nach Figur 1 und 2 wird die Verbindung zwischen dem Lagerstutzen 3 und dem rohrförmigen Element 5 für mindestens einen weiteren Befestigungspunkt 18 an ein angrenzendes Bauteil genutzt. Vorzugsweise wird dies mit einem an das Getriebe 20 zusätzlich angebrachten Befestigungspunkt 18 erreicht. An der Stirnseite 30 des Getriebes 20 ist ein Zapfen 31 angeordnet - z.B. durch spanlose oder spanende Umformung usw. - oder angeschweißt, gesteckt usw.. Auf dem Zapfen 31 ist ein Winkelblech 32 über einen Puffer 33 gelagert. Der Puffer 33 ist in eine Ausnehmung 34 des Winkelblechs 32 eingebracht und ist mit einem Loch 35 auf dem Zapfen 31 aufgesteckt. Mit dem vom Getriebe 20 wegweisenden, abgewinkelten Ende 36 des Winkelblechs 32, wird dieses mit einem angrenzenden Bauteil, beispielsweise mit einer Fahrzeugkarosserie verschraubt oder verschweißt. Der zusätzliche Befestigungspunkt 18 schafft insgesamt eine steifere Abstützung. Der Puffer 33 dämpft Schwingungen und Vibrationen.

## Patentansprüche

1. Wischeranlage mit einer Rohrplatine (1), an der ein Wischerantrieb (2) mit einer in einem Lagerstutzen (3) geführten Antriebswelle (4) befestigt ist und der Wischerantrieb (2) mit dem Lagerstutzen (3) in ein an der Rohrplatine (1) angeordnetes rohrförmiges Element (5) eingesteckt ist, wobei der Wischerantrieb (2) in Umfangsrichtung durch Formschluß zwischen dem Lagerstutzen (3) und dem rohrförmigen Element (5) fixiert ist.

2. Wischeranlage nach Anspruch 1, **dadurch gekennzeichnet, daß** das rohrförmige Element (5) an die Rohrplatine (1) angeformt ist.

3. Wischeranlage nach Anspruch 1 oder 2, **dadurch gekennzeichnet, daß** der Lagerstutzen (3) durch die Rohrplatine (1) gesteckt ist.

4. Wischeranlage nach Anspruch 1, 2 oder 3 **dadurch gekennzeichnet, daß** der Wischerantrieb (2) in Umfangsrichtung durch Kraftschluß zwischen dem Lagerstutzen (3) und dem rohrförmigen Element (5) fixiert ist.

5. Wischeranlage nach Anspruch 1, **dadurch gekennzeichnet, daß** das rohrförmige Element (5) eine von der Kreisform abweichende, insbesondere polygonförmige oder unrunden Innenkontur (6) aufweist und der Lagerstutzen (3) eine passende Außenkontur (7) hat.

6. Wischeranlage nach einem der vorhergehenden Ansprüche, **dadurch gekennzeichnet, daß** sich zwischen Lagerstutzen (3) und dem rohrförmigen Element (5) eine Verzahnung (8) befindet.

7. Wischeranlage nach einem der vorhergehenden Ansprüche, **dadurch gekennzeichnet, daß** die Kontur (9) zwischen dem Lagerstutzen (3) und dem rohrförmigen Element (5) in Längsrichtung (10) konisch ist.

8. Wischeranlage nach einem der Ansprüche 1 bis 6, **dadurch gekennzeichnet, daß** die Kontur (9) zwischen dem Lagerstutzen (3) und dem rohrförmigen Element (5) in Längsrichtung (10) abgestuft ist.

9. Wischeranlage nach einem der vorhergehenden Ansprüche, **dadurch gekennzeichnet, daß** das rohrförmige Element (5) mit einem Dorn kalibriert ist.

10. Wischeranlage nach einem der vorhergehenden Ansprüche, **dadurch gekennzeichnet, daß** der Wischerantrieb (2) mit mindestens einem Bügel (11) an der Rohrplatine (1) befestigt ist, der Rohrplatine (1) und Wischerantrieb (2) verspannt.

11. Wischeranlage nach einem der Ansprüche 1 bis 9, **dadurch gekennzeichnet, daß** der Wischerantrieb (2) mit mindestens einer Schraube (13), die durch die Rohrplatine (1) greift, mit dieser verbunden ist.

12. Wischeranlage nach einem der Ansprüche 1 bis 9, **dadurch gekennzeichnet, daß** der Lagerstutzen (3) im rohrförmigen Element (5) in axialer Richtung (10) formschlüssig fixiert ist.

13. Wischeranlage nach Anspruch 12, **dadurch gekennzeichnet, daß** der Lagerstutzen (3) in axialer Richtung (10) mit einem Sicherungsring (15) fixiert ist.

14. Wischeranlage nach Anspruch 12, **dadurch gekennzeichnet, daß** sich auf dem Lagerstutzen (3) eine Überwurfmutter (16) befindet, die diesen in axialer Richtung (10) gegenüber dem rohrförmigen Element (5) fixiert.

15. Wischeranlage nach Anspruch 12, **dadurch gekennzeichnet, daß** der Lagerstutzen (3) durch eine Umformung (17) des rohrförmigen Elementes (5) fixiert ist.

16. Wischeranlage nach einem der vorhergehenden Ansprüche, **dadurch gekennzeichnet, daß** die Verbindung zwischen dem rohrförmigen Element (5) und dem Lagerstutzen (3) zu mindestens einem weiteren Befestigungspunkt (18) der Wischeranlage an ein angrenzendes Bauteil genutzt wird.

17. Wischeranlage nach Anspruch 16, **dadurch gekennzeichnet, daß** mindestens ein Befestigungspunkt (18) der Wischeranlage an ein angrenzendes Bauteil am Wischerantrieb (2) integriert ist.

## Claims

1. Wiper system having a tube blank (1) to which a wiper drive (2) having a drive shaft (4) guided in a bearing connection (3) is fastened, and the wiper drive (2) together with the bearing connection (3) is inserted into a tubular element (5) arranged on the tube blank (1), the wiper drive (2) being fixed in the circumferential direction by an interlocking connection between the bearing connection (3) and the tubular element (5).

2. Wiper system according to Claim 1, **characterized in that** the tubular element (5) is integrally formed on the tube blank (1).

3. Wiper system according to Claim 1 or 2, **characterized in that** the bearing connection (3) is inserted through the tube blank (1).

4. Wiper system according to Claim 1, 2 or 3, **characterized in that** the wiper drive (2) is fixed in the circumferential direction by a frictional connection between the bearing connection (3) and the tubular element (5).

5. Wiper system according to Claim 1, **characterized in that** the tubular element (5) has an internal contour (6) which deviates from the circular shape and is, in particular, polygonal or non-circular, and the bearing connection (3) has a matching external contour (7).

6. Wiper system according to one of the preceding claims, **characterized in that** a toothing (8) is situated between the bearing connection (3) and the tubular element (5).

7. Wiper system according to one of the preceding claims, **characterized in that** the contour (9) between the bearing connection (3) and the tubular element (5) is conical in the longitudinal direction (10).

8. Wiper system according to one of Claims 1 to 6, **characterized in that** the contour (9) between the bearing connection (3) and the tubular element (5) is stepped in the longitudinal direction (10).

9. Wiper system according to one of the preceding claims, **characterized in that** the tubular element (5) is calibrated with a mandrel.

10. Wiper system according to one of the preceding claims, **characterized in that** the wiper drive (2) is fastened to the tube blank (1) by at least one bracket (11) which secures the tube blank (1) and wiper drive (2).

11. Wiper system according to one of Claims 1 to 9, **characterized in that** the wiper drive (2) is connected to the tube blank (1) by at least one screw (3) which grips through the said tube blank.

12. Wiper system according to one of Claims 1 to 9, **characterized in that** the bearing connection (3) is fixed in the tubular element (5) in an interlocking manner in the axial direction (10).

13. Wiper system according to Claim 12, **characterized in that** the bearing connection (3) is fixed in the axial direction (10) by a securing ring (15).

14. Wiper system according to Claim 12, **characterized in that** a union nut (16) is situated on the bearing connection (3) and fixes the latter with respect to the tubular element (5) in the axial direction (10).

15. Wiper system according to Claim 12, **characterized in that** the bearing connection (3) is fixed by a deformation (17) of the tubular element (5).

16. Wiper system according to one of the preceding claims, **characterized in that** the connection between the tubular element (5) and the bearing connection (3) is used for at least one further fastening point (18) of the wiper system to an adjacent component.

17. Wiper system according to Claim 16, **characterized in that** at least one fastening point (18) of the wiper system to an adjacent component is integrated on the wiper drive (2).

## Revendications

1. Installation d'un essuie-glace, comprenant une platine tubulaire (1) sur laquelle est fixé un entraînement d'essuie-glace (2) dont l'arbre d'entraînement (4) est monté dans une tubulure de palier (3), l'entraînement (2) avec sa tubulure de palier (3) étant emmanché dans un élément tubulaire (5) monté sur la platine tubulaire (1),
**caractérisée en ce que**
l'entraînement (2) est fixé en direction périphérique par combinaison de formes entre la tubulure de palier (3) et l'élément tubulaire (5).

2. Installation d'essuie-glace selon la revendication 1,
**caractérisée en ce que**
l'élément tubulaire (5) est réalisé par formage sur la platine tubulaire (1).

3. Installation d'essuie-glace selon la revendication 1 ou 2,
**caractérisée en ce que**
la tubulure de palier (3) est enfoncée à travers la platine tubulaire (1).

4. Installation d'essuie-glace selon l'une quelconque des revendications 1, 2 ou 3,
**caractérisée en ce que**
l'entraînement d'essuie-glace (2) est fixé en direction périphérique par verrouillage à force entre la tubulure de palier (3) et l'élément tubulaire (5).

5. Installation d'essuie-glace selon la revendication 1,
**caractérisée en ce que**
l'élément tubulaire (5) présente un contour interne (6) s'écartant de la forme circulaire, en particulier une forme polygonale ou non ronde, à laquelle est adapté le contour externe (7).

6. Installation d'essuie-glace selon l'une quelconque des revendications précédentes,
**caractérisée en ce qu'**
entre la tubulure de palier (3) et l'élément tubulaire (5) se trouve une denture (8).

7. Installation d'essuie-glace selon l'une quelconque des revendications précédentes,
**caractérisée en ce que**
le contour (9) entre la tubulure de palier (3) et l'élément tubulaire (5) est conique en direction longitudinale (10).

8. Installation d'essuie-glace selon l'une quelconque des revendications 1 à 6,
**caractérisée en ce que**
le contour (9) entre la tubulure de palier (3) et l'élément tubulaire (5), est étagé en direction longitudinale.

9. Installation d'essuie-glace selon l'une quelconque des revendications précédentes,
**caractérisée en ce que**
l'élément tubulaire (5) est calibré au moyen d'un mandrin.

10. Installation d'essuie-glace selon l'une quelconque des revendications précédentes,
**caractérisée en ce que**
l'entraînement d'essuie-glace (2) est fixé sur la platine tubulaire (1) par au moins un étrier (11) qui serre la platine (1) et l'entraînement (2).

11. Installation d'essuie-glace selon l'une quelconque des revendications 1 à 9,
**caractérisée en ce que**
l'entraînement d'essuie-glace (2) est relié à la platine tubulaire (1) par au moins une vis (13) en prise avec celle-ci.

12. Installation d'essuie-glace selon l'une quelconque des revendications 1 à 9,
**caractérisée en ce que**
la tubulure de palier (3) est fixée en direction axiale (10) par combinaison de formes dans l'élément tubulaire (5).

13. Installation d'essuie-glace selon la revendication 12,
**caractérisée en ce que**
la tubulure de palier (3) est fixée en direction axiale (10) par une bague de sécurité (15).

14. Installation d'essuie-glace selon la revendication 12,
**caractérisée en ce que**
sur la tubulure de palier (3) se trouve un écrou (16) qui la fixe en direction axiale (10) par rapport à l'élément tubulaire (5).

15. Installation d'essuie-glace selon la revendication 12,
**caractérisée en ce que**
la tubulure de palier (3) est fixée par déformation périphérique (17) de l'élément tubulaire (5).

16. Installation d'essuie-glace selon l'une quelconque des revendications précédentes,
**caractérisée en ce que**
la liaison entre l'élément tubulaire (5) et la tubulure de palier (3) est utilisée pour créer au moins un autre point de fixation (18) de l'installation sur un composant voisin.

17. Installation d'essuie-glace selon la revendication 16,
**caractérisée en ce qu'**
au moins un point de fixation (18) de l'installation d'essuie-glace est intégré à un composant voisin de l'entraînement d'essuie-glace (2).
